# EUROPEAN PATENT SPECIFICATION

(11) **EP 2 867 050 B1**
(45) Date of publication and mention of the grant of the patent: **05.08.2020**
(21) Application number: 13809930.4
(22) Date of filing: 26.06.2013
(51) Int. Cl.: B60K 6/48, H02K 49/00, H02P 15/00

(54) **DRIVE SYSTEM AND METHOD OF DRIVING A VEHICLE**
ANTRIEBSSYSTEM UND VERFAHREN ZUM ANTRIEB EINES FAHRZEUGS
SYSTÈME D'ENTRAÎNEMENT ET PROCÉDÉ D'ENTRAÎNEMENT D'UN VÉHICULE

(30) Priority: 27.06.2012 SE 1250701
(43) Date of publication of application: 06.05.2015
(73) Proprietor: Scania CV AB, 151 87 Södertälje (SE)
(72) Inventor: VÅGSTEDT, Nils-Gunnar, 187 74 Täby (SE); PETTERSSON, Niklas, 117 27 Stockholm (SE)
(74) Representative: Scania CV AB
(86) International application number: PCT/SE2013/050788
(87) International publication number: WO 2014/003669

(56) References cited:
- EP-A1- 1 319 546
- WO-A1-2010/082893
- DE-A1- 10 015 912
- US-A1- 2010 173 746
- US-A1- 2012 004 797
- US-B1- 6 428 438

## Description

### BACKGROUND OF THE INVENTION AND PRIOR ART

The present invention concerns a drive system according to the preamble of claim 1 and a method of driving a vehicle according to the preamble of claim 11.

To use a conventional clutch mechanism which disconnects the input shaft of the gear box from the combustion engine during gear changing processes in the gear box involves disadvantages. When a stationary vehicle starts, the discs of the clutch mechanism slide against each other. Thereby heating of the discs is provided. This heating results in an increased fuel consumption and a wear of the clutch discs. A conventional clutch mechanism is also relatively heavy and expensive. It occupies also a relatively large space in the vehicle. To use a hydraulic moment converter also results in losses.

Hybrid vehicles can be driven by a primary motor which can be a combustion engine and a secondary motor which can be an electric machine. The electric machine is equipped with at least one energy storage for storing electric energy and control equipment for controlling the flow of electric energy between the energy storage and the electric machine. The electric machine can thereby alternately work as motor and generator in dependence on the operation state of the vehicle. When the vehicle is braked, the electric machine generates electric energy which is stored in the energy storage. The stored electric energy is used later, for example, for driving the vehicle and operating different auxiliary systems in the vehicle.

The Swedish patent application SE 1051384-4, which has not been made public, shows a hybrid drive system with a planetary gear which comprises three components, namely a sun wheel, a planet wheel holder and a ring wheel. One of the three components of the planetary gear is connected to an output shaft of the combustion engine, a second component of the planetary gear is connected to an input shaft to the gear box and a third component of the planetary gear is connected to a rotor of an electric machine. The electric machine is connected to an energy storage such that it alternately can work as motor and generator. The rotation speed of electric machines can be controlled in a stepless manner. By controlling the rotation speed of the electric machine, the input shaft to the gear box can be given a desired rotation speed. With a hybrid system according to SE 1051384-4 no clutch mechanism needs to be used in the drive line of the vehicle.

With a hybrid system according to SE 1051384-4 no clutch mechanism needs to be used in the drive line of the vehicle. The hybrid drive system is however dependent on that the hybrid battery functions in order to make it possible to start the vehicle.

EP-A-1 319 546 shows a device that has an internal combustion engine, starter-generator and discrete manual gearbox, a single-stage planetary gearbox in the frictionless drive train between the engine or starter-generator and discrete gearbox, a digitally switchable bridging device, a torque manager for control of the engine and starter-generator for drive-side null torque or revolution rate synchronization with respect to the gearbox input shaft with the bridge coupling open.

US 2012/004797 A shows a hardware configuration similar to that of SE 1051384-4 mentioned above.

### SUMMARY OF THE INVENTION

The object of the present invention is to provide a drive system for a vehicle of the initially mentioned kind, where it essentially always is possible to start the vehicle.

This object is achieved with a drive system of the initially mentioned kind, which is characterized by the features which are specified in the characterizing portion of claim 1. When the combustion engine is starting, a first of the components of the planetary gear rotates with the idle running rotation speed of the combustion engine. The second of the components of the planetary gear which is connected to the gear box is at rest as long as the vehicle is stationary. The third of the components of the planetary gear which is connected to the rotor of the electric machine rotates backwards with a negative rotation speed. In order for a driving moment to be transferred to the gear box, it is required that the rotor of the electric machine is braked. By connecting the low voltage battery to the electric machine, a braking moment can be created which counteracts the negative rotation of the rotor. Because of this, a driving moment can be transferred to the gear box such that the vehicle starts. A relatively small power is required in order to brake the rotor of the electric machine at the start of the vehicle. A low voltage battery can normally supply this power and carry out this task. At the starting process, the electric machine generates electric energy which is led to the low voltage battery. There is thus no risk that the low voltage battery is discharged at a start of the vehicle.

According to the invention, the drive system comprises an energy storage and that the low voltage battery is connected to the electric machine when the energy storage is estimated to have an undesired function. In this case, the vehicle is a hybrid vehicle which is driven by a primary motor in the form of a combustion engine and a secondary motor in the form of said electric machine. Except for the energy storage, the vehicle comprises control equipment in order to control the flow of electric energy between the energy storage and the electric machine. The electric machine has thereby, in addition to the function to enable the control of the rotation speed of the input shaft of the gear box, also the ability to alternately work as motor and generator in dependence on the operation state of the vehicle. With the help of the low voltage battery and an electric switch, it is possible to at least temporarily replace the energy storage when it has an undesired function. The vehicle may after the start with the low voltage battery be driven to a service place or the like where the energy storage can be repaired or replaced by a new one. The energy storage may comprise a battery and/or a capacitor.

According to an embodiment of the present invention, the drive system comprises a DC-DC transformer which is adapted to transform electric energy which is led from the electric machine to the low voltage battery. An electric machine in a hybrid vehicle is fed with and generates normally a relatively high voltage. In order to make it possible to transfer electric energy from the electric machine to the low voltage battery during the starting process, it is suitable to use a DC-DC transformer.

According to an embodiment of the present invention, the DC-DC transformer is bidirectional such that it can also lead and transform electric energy which is led from the low voltage battery to the electric machine. During certain operation conditions, electric energy may be needed to be supplied from the low voltage battery to the electric machine. In order to enable the transfer of electric energy in this direction, it is suitable to use a bidirectional DC-DC transformer. Alternatively, two separate DC-DC transformers may be used where one DC-DC transformer leads electric energy in one of said directions and the other DC-DC transformer leads electric energy in the opposite direction.

According to another preferred embodiment of the invention, the low voltage battery is an existing 24 volt battery in the vehicle which, inter alia, is used for starting the combustion engine. Heavier vehicles are normally equipped with a starting battery which has a high capacity. With the help of such a battery it is possible to brake the rotor of the electric machine and start the vehicle. Conventional 24 volt batteries in vehicles are relatively inexpensive. If the battery, contrary to expectation, cannot handle the stresses to which it is exposed when the vehicle starts, it can easily be exchanged and replaced by a new one.

According to an embodiment of the present invention, the drive system comprises a control unit which is adapted to control the amount of electric energy which is led from the electric machine to the low voltage battery with the help of control equipment such that the vehicle obtains a desired speed increase during the starting process. With advantage, the vehicle can obtain a substantially constant speed increase during the starting process. The starting process of the vehicle may refer to the time it takes for the vehicle to accelerate from stationary to a speed at which a starting gear can be disengaged and replaced by a higher gear in the gear box. The starting process may alternatively refer to a time period in the order of 1 to 3 seconds or of another suitable length.

According to another preferred embodiment of the invention, the drive system comprises a control unit which is adapted to control the electric machine with the help of the low voltage battery at operation occasions when gears are shifted in the vehicle. If the low voltage battery has a sufficient capacity, it is possible to also use the low voltage battery for at least helping to create a momentless state in the gear box when an existing gear is to be disengaged of the gear box and a new gear is to be engaged. This control can be combined with a motor control function which controls the rotation speed of the combustion engine when gears are engaged and disengaged in the gear box. The same control unit or two separate control units can be used in the different cases.

According to another preferred embodiment of the invention, the drive system comprises a control unit which is adapted to receive information concerning a parameter in order to determine if the energy storage has an undesired function. The control unit may, for example, receive information from an electric measurement instrument which measures a parameter which is related to the electric energy which is led between the regular energy storage and the electric machine. The electric measurement instrument may measure a parameter which concerns the current and/or voltage of the electric energy. If the energy storage does substantially not deliver or receive any electric energy during operation, it probably has an undesired function.

According to another preferred embodiment of the invention, the drive system comprises an indication member which indicates when the energy storage has an undesired function.

The indication member can be a warning lamp or a sound alarm which is activated if the energy storage does not function in the required manner. With the help of such an indication member, the driver becomes immediately informed when the energy storage does not function in a desired manner. That the hybrid storage has an undesired function may refer to the fact that the energy storage does not deliver electric energy in a desired manner or that it does not generate electric energy in a desired manner, that it cannot maintain a required charge level etcetera. A control unit may be adapted to automatically set the electric switch in a position such that the low voltage battery is connected to the electric machine at occasions when the energy storage is estimated to have an undesired function. Alternatively, the driver may manually set the electric switch with a button or the like when the indication member indicates that the energy storage is out of operation.

According to another preferred embodiment of the invention, the output shaft of the combustion engine is connected to the sun wheel of the planetary gear, the input shaft of the gear box is connected to the planet wheel holder of the planetary gear and the rotor of the electric machine is connected to the ring wheel of the planetary gear. With such a design, the included components may be given a compact construction. The sun wheel and the planet wheel holder may be connected to the output shaft of the combustion engine and the input shaft of the gear box, respectively, with the help of spline joints or the like. It is thereby guaranteed that the sun wheel rotates with the same rotation speed as the output shaft of the combustion engine and that the planet wheel holder rotates with the same rotation speed as the input shaft of the gear box. The rotor of the electric machine may be fixedly arranged on an external peripheral surface of the ring wheel. The internal peripheral surface of the ring wheel is normally provided with cogs. The external peripheral surface of the ring wheel is normally smooth and very well suited for carrying the rotor of the electric machine. The ring wheel and the rotor of the electric machine thereby form a rotatable unit. Alternatively, the rotor of the electric machine may be connected to the ring wheel via a transmission. It is however possible to connect the output shaft of the combustion engine, the input shaft of the gear box and the rotor of the electric machine with any of the other components of the planetary gear.

The initially mentioned object is achieved also by the method according to claims 10-18.

### SHORT DESCRIPTION OF THE DRAWINGS

In the following preferred embodiments of the invention are described, as examples, with reference to the annexed drawings, on which:
- Fig. 1: shows a drive line of a vehicle with a drive system according to the present invention,
- Fig. 2: shows the drive system in more detail,
- Fig. 3: shows how the rotation speed of the different components in the planetary gear may vary at a starting process of the vehicle,
- Fig. 4: shows how the moment of the different components in the planetary gear may vary at a starting process of the vehicle and

### DETAILED DESCRIPTION OF PREFERRED EMBODIMENTS OF THE INVENTION

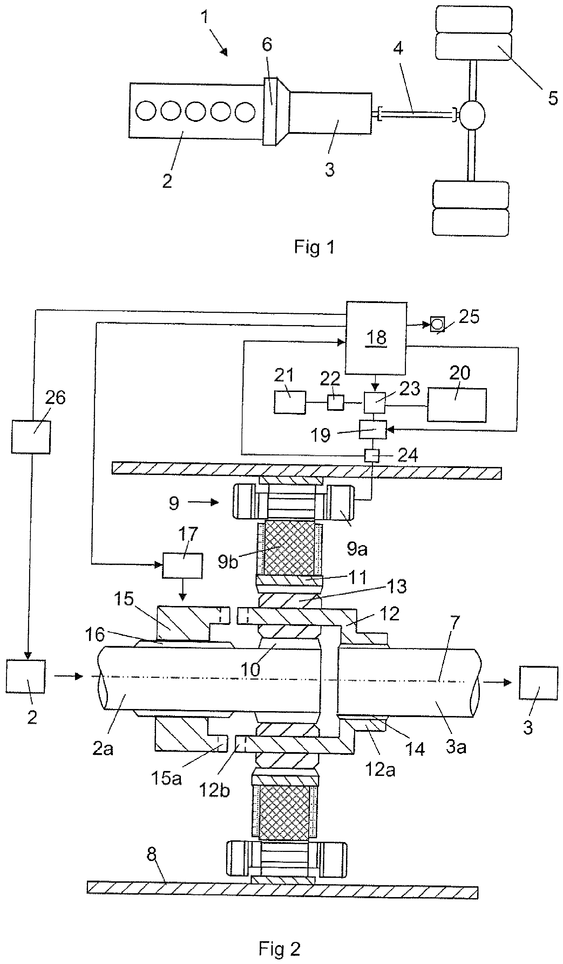

Fig 1 shows a drive line for a heavy vehicle 1. The drive line comprises a combustion engine 2, a gear box 3, a number of drive shafts 4 and drive wheels 5. Between the combustion engine 2 and the gear box 3 the drive line comprises an intermediate part 6. Fig 2 shows the components in the intermediate part 6 in more detail. The combustion engine 2 is provided with an output shaft 2a and the gear box 3 with an input shaft 3a in the intermediate part 6. The output shaft 2a of the combustion engine is coaxially arranged in relation to the input shaft 3a of the gear box. The output shaft 2a of the combustion engine and the input shaft 3a of the gear box are rotatably arranged around a common axis of rotation 7. The intermediate part 6 comprises a housing 8 which encloses an electric machine 9 and a planetary gear. The electric machine 9 comprises in a customary manner a stator 9a and a rotor 9b. The stator 9a comprises a stator core which is attached in a suitable manner on the inside of the housing 8. The stator core comprises the windings of the stator. The electric machine 9 is adapted to during certain operation occasions use stored electric energy for supplying drive power to the input shaft 3a of the gear box and to during other operation occasions use the kinetic energy of the input shaft 3 of the gear box for extracting and storing electric energy.

The planetary gear is arranged substantially radially inside of the stator 9a and rotor 9b of the electric machine. The planetary gear comprises in a customary manner a sun wheel 10, a ring wheel 11 and a planet wheel holder 12. The planet wheel holder 12 carries a number of cog wheels 13 which are rotatably arranged in a radial space between the cogs of the sun wheel 10 and the ring wheel 11. The sun wheel 10 is attached on a peripheral surface of the output shaft 2a of the combustion engine. The sun wheel 10 and the output shaft 2a of the combustion engine rotate as a unit with a first rotation speed n₁. The planet wheel holder 12 comprises an attachment portion 12a which is attached on a peripheral surface of the input shaft 3a of the gear box with the help of a spline joint 14. With the help of this joint, the planet wheel holder 12 and the input shaft 3a of the gear box can rotate as a unit with a second rotation speed n₂. The ring wheel 11 comprises an external peripheral surface on which the rotor 9b is fixedly mounted. The rotor 9b and the ring wheel 11 constitute a rotatable unit which rotates with a third rotation speed n₃.

The vehicle comprises a locking mechanism which is movable between a first open position in which the three components 10-12 of the planetary gear are allowed to rotate with different rotation speeds and a second locked position in which it locks together two of the components 10, 12 of the planetary gear such that the three components 10-12 of the planetary gear rotate with the same rotation speed. In this embodiment, the locking mechanism comprises a displaceable coupling member 15. The coupling member 15 is attached on the output shaft 2a of the combustion engine with the help of a spline joint 16. The coupling member 15 is in this case arranged, secured against turning, on the output shaft 2a of the combustion engine and displaceably arranged in an axial direction on the output shaft 2a of the combustion engine. The coupling member 15 comprises a coupling portion 15a which is connectable to a coupling portion 12b of the planet wheel holder 12. The locking mechanism comprises a schematically shown displacement member 17 is adapted to displace the coupling member 15 between the first free position I₁ when the coupling portions 15a, 12b are not in engagement with each other and the second locked position I₂ when the coupling portions 15a, 12b are in engagement with each other. In the first open position, the output shaft 2 of the combustion engine and the input shaft 3 of the gear box can rotate with different rotation speeds. When the coupling portions 15a, 12b are in engagement with each other, the output shaft 2 of the combustion engine and the input shaft 3 of the gear box will rotate with the same rotation speed.

An electric control unit 18 is adapted to control the displacement member 17. The control unit 18 is also adapted to decide at which occasions the electric machine 9 is to work as motor and at which occasions it is to work as generator. In order to decide this, the control unit 18 can receive actual information from suitable operation parameters. The control unit 18 also controls a schematically shown control equipment 19 which controls the flow of electric energy between an energy storage 20 and the stator 9a of the electric machine. The control unit 18 can be a computer with a suitable software for this purpose. The control unit 18 can of course constitute one or more separate control units. At occasions when the electric machine 9 works as motor, stored electric energy from the energy storage 20 is supplied to the stator 9a. At occasions when the electric machine works as generator, electric energy from the stator 9a is supplied to the energy storage 20. The energy storage 20 delivers and stores electric energy with a voltage which is in the order of 200-800 Volt. Since the intermediate part 6 between the combustion engine 2 and the gear box 3 in a vehicle is limited, it is required that the electric machine 9 and the planetary gear constitute a compact unit. The components 10-12 of the planetary gear are here arranged substantially radially inside of the stator 9a of the electric machine. The rotor 9b of the electric machine, the ring wheel 11 of the planetary gear, the output shaft 2a of the combustion engine and the input shaft 3a of the gear box are here rotatably arranged around a common axis of rotation 5. With such a design, the electric machine 9 and the planetary gear occupy a relatively small space.

The vehicle comprises a 24 volt battery 21 for the start of the combustion engine 2 and the operation of other equipment in the vehicle 1. In heavy vehicles 1, 24 volt batteries 21 with a relatively high capacity are used. The 24 volt battery 21 is, via an electric line and an electric switch 23, connectable to the stator 9a of the electric machine. The electric line comprises a DC-DC transformer 22 between the 24 volt battery 21 and the electric switch 23. The DC-DC transformer 22 has a capacity to transform electric energy which is led from the stator 9a of the electric machine, which stator delivers electric energy with the same voltage level as the energy storage 20, to the voltage level which is the case in the 24 volt battery 21. The DC-DC transformer 22 may with advantage be bidirectional. It can thereby also if required lead electric energy from the 24 volt battery 20 to the stator 7 of the electric machine. When electric energy is led in this direction, the DC-DC transformer 22 transforms electric energy with the voltage level 24 volt to the higher voltage level of the hybrid battery. In this case, may, alternatively, two separate DC-DC transformers be used which lead electric energy in one direction each of said directions.

During the operation of the electric machine 9, the control unit 18 receives information from an electric meter 24 which senses a parameter which is related to the electric energy which is transported to and from the energy storage 20. The electric meter may measure current and voltage. If the measured electric energy is below an expected value, the energy storage 20 does probably not function in the intended manner. If substantially no electric energy is transported to and from the energy storage 20 during the operation of the vehicle, it is estimated not to have a desired function. If the control unit 18 estimates that the energy storage 20 does not have a desired function, it activates an indication member 25 in the driver's cab. The indication member 25 may be a flashing lamp or a sound alarm or the like. The task of the indication member 25 is to make the driver aware that the energy storage 20 is out of operation. The control unit 18 may now automatically switch the electric switch 23 and connect the 24 volt battery 20 to the electric machine 9 in the manner which is shown in Fig. 2. Alternatively, the driver may manually with a button or the like activate the connection between the 24 volt battery 20 and the electric machine. The vehicle 1 is equipped with a motor control function 26 with which the rotation speed n₁ of the combustion engine can be controlled. The control unit 18 thereby has the possibility to activate the motor control function 25 when gears are engaged and disengaged in the gear box 3 in order to create a momentless state in the gear box 3.

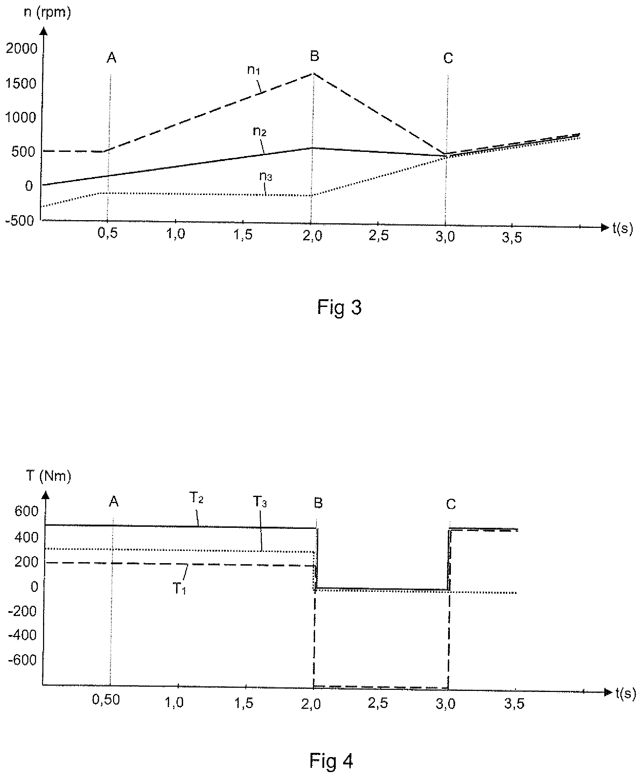

Fig. 3 and 4 show an example of how the rotation speed n and the moment T may vary with time t for the output shaft 2a of the combustion engine, the rotor 9b of the electric machine and the input shaft 3a of the gear box at a starting process of the vehicle 1 when the energy storage 20 is out of operation. Rotation speed n₁ and moment T₁ of the output shaft 2a of the combustion engine are shown with dashed lines, rotation speed n₂ and moment T₂ of the input shaft 3 of the gear box are shown with continuous lines and rotation speed n₃ and moment T₃ of the electric machine 9 are shown with dotted lines. The relationship between the number of cogs z₁ of the sun wheel 9 and the number of cogs z₂ of the ring wheel 10 is in this example z₁/z₂ = 0.7.

If the energy storage 20 is estimated to be out of operation, the control unit 18 sets the electric switch 23 in a position such that the 24 volt battery 21 is connected to the electric machine 9. The combustion engine 2 starts at t = 0. The combustion engine 2 runs initially idle with the rotation speed n₁ = 500 rpm and the moment T₁ = 200 Nm. The input shaft 3a of the gear box is at rest and has thus initially the rotation speed n₂ = 0 rpm. Since all the components in the planetary gear are connected to each other with a predetermined transmission ratio, the ring wheel 11 obtains an initial rotation speed n₃ which is determined by the two other rotation speeds n₁, n₂. With the above transmission ratio z₁/z₂ = 0.7, the ring wheel obtains the rotation speed n₃ = -350 rpm. The ring wheel 11 will here rotate in an opposite direction in relation to the sun wheel 10.

The control unit 18 controls thereafter the control mechanism 19 such that the electric machine 9 supplies a moment T₃ which in this case is 300 Nm. Since the ring wheel 11 rotates in the opposite direction in relation to the sun wheel 10, the ring wheel is braked by the moment T₃. Thereby, electric energy is generated which is led from the electric machine to the low voltage battery 21 via the DC-DC transformer 22. The input shaft 3a of the gear box here obtains the moment T₂ = 500 Nm which is the sum of the moment T₁ of the combustion engine and the braking moment T₂ of the electric machine. The moment T₂ gets the input shaft 3a of the gear box going such that it starts to rotate, i.e. n₂ becomes larger than zero. The vehicle 1 thereby starts.

At the time A, the rotation speed n₁ of the combustion engine is increased. Because of this, it is ensured that the ring wheel 11 can rotate with an opposite rotation speed n₃ of a suitable magnitude such that it also thereafter the ring wheel 11 can and ensure that the input shaft 3a of the gear box obtains an increasing rotation speed n₂ and the vehicle 1 a successively increasing speed during the starting process. The moments T₁, T₂, T₃ present constant values up to a time B. At the time B, the starting process is over. At the time B, the combustion engine 2 is braked with an exhaust brake, a controllable turbo or is retarded in another manner such that the rotation speed is reduced. The rotation speed n₁ of the combustion engine 2 sinks at the same time as the input shaft 3a of the gear box maintains a constant rotation speed n₂. The vehicle 1 is now driven with a constant speed. When the rotation speed n₁ of the combustion engine 2 sinks at the same time as the rotation speed n₂ of the gear box is constant, the rotation speed n₃ of the electric machine 9 increases. The rotation speed n₃ of the rotor changes from being a negative rotation speed to a positive. At the time C all components in the planetary gear rotate with the same rotation speed. The control unit 18 activates the displacement member 17 which displaces the coupling member 15 such that the coupling portions 15a, 12b get into engagement with each other. The output shaft 2 of the combustion engine and the input shaft 3 of the gear box are now locked in relation to each other and will thereby rotate with the same rotation speed. After that the components included in the planetary gear have been locked, only the combustion engine 2 is responsible for driving the vehicle 1. The moment T₃ of the electric machine sinks here to 0. The electric machine 9 rotates with the same rotation speed n₃ as the output shaft 2 of the combustion engine and the input shaft 3 of the gear box.

At the continued journey, a higher gear needs to be engaged in the gear box 3. The control unit 18 activates the displacement member 17 which displaces the coupling member 15 to a disengaged position. The connection between the output shaft 2 of the combustion engine and the input shaft 3 of the gear box ceases. The control unit 18 calculates the rotation speed n₁ which the input shaft 2a of the combustion engine needs to be driven with in order to achieve a momentless state in the gear box 3. The control unit 18 activates the motor control function 26 which gives the combustion engine 2 the calculated rotation speed n₁, after which the gear is disengaged. After that the gear has been disengaged, a new gear is to be engaged. The control unit 18 calculates here the rotation speed n₁ which the output shaft 2 of the combustion engine needs to be driven with in order for it to rotate with the same rotation speed as the input shaft 3a of the gear box. The control unit 18 activates the motor control function 26 which gives the combustion engine 2 the calculated rotation speed n₁, after which the new gear is engaged. The control unit 18 thereafter activates the motor control function 26 again in order to control the rotation speed n₁ such that all the components in the planetary gear obtain the same rotation speed n₁, n₂, n₃. When all the components in the planetary gear rotate with the same rotation speed, the control unit 18 activates the displacement member 17 which displaces the coupling member 15 such that the coupling portions 15a, 12b get into engagement with each other. After locking the planetary gear, only the combustion engine 2 is responsible for driving the vehicle.

In this case, the 24 volt starting battery 21 is used instead of the energy storage 20 during a starting process of the vehicle 1. The vehicle 1 can thereby be started and driven to a service place or the like where the energy storage 20 can be exchanged or repaired. During a starting process, the 24 volt battery 21 receives electric energy from the electric machine 9. It is however not excluded to also use the 24 volt battery 21 and the electric machine 9 for controlling the rotation speed n₃ of the ring wheel 11 in order to obtain the above mentioned state in the gear box 3 when disengaging and engaging gears. In this case, the 24 volt battery 21 must both be able to receive and deliver electric energy to the electric machine 9.

The invention is in no way limited to the embodiment described on the drawings but can be varied freely within the scope of the claims. For example, a transmission with a gear ratio can be arranged between the rotor 9 and the ring wheel 11. The rotor 9 and the ring wheel 11 need thus not rotate with the same rotation speed.

## Claims

1. Drive system for a vehicle (1), wherein the drive system comprises a combustion engine (2) with an output shaft (2a), a gear box (3) with an input shaft (3a), an electric machine (9) which comprises a stator (9a) and a rotor (9b), and a planetary gear which comprises a sun wheel (10), a ring wheel (11) and a planet wheel holder (12), wherein the output shaft (2a) of the combustion engine is connected to a first of said components of the planetary gear such that a rotation of this shaft (2a) leads to a rotation of this component, wherein the input shaft (3a) of the gear box is connected to a second of said components of the planetary gear such that a rotation of this shaft leads to a rotation of this component and the rotor (9b) of the electric machine is connected to a third of said components of the planetary gear such that a rotation of the rotor (9b) leads to a rotation of this component, **characterized in that** the drive system comprises a low voltage battery (21) with a rated voltage of at most 60 volt and an electric switch (23) with which the low voltage battery (21) is connectable to the electric machine (9) and a hybrid energy storage (20), and that the low voltage battery (21) is connected to the electric machine (9) during a starting process of the vehicle when the hybrid energy storage (20) is estimated to have an undesired function.

2. Drive system according to claim 1, **characterized in that** the drive system comprises a DC-DC transformer (22) which is adapted to transform electric energy which is led from the electric machine (9) to the low voltage battery (21).

3. Drive system according to claim 2, **characterized in that** the DC-DC transformer (22) is bidirectional such that it can also lead and transform electric energy which is led from the low voltage battery (21) to the electric machine (9).

4. Drive system according to claim 2 or 3, **characterized in that** the low voltage battery (21) is an existing 24 volt battery in the vehicle (1) which, inter alia, is used for starting the combustion engine (1).

5. Drive system according to any of the preceding claims, **characterized in that** the drive system comprises a control unit (18) which is adapted to control the amount of electric energy which is led from the electric machine (9) to the low voltage battery (21) with the help of control equipment (19) such that the vehicle (1) obtains a desired speed increase during the starting process.

6. Drive system according to any of the preceding claims, **characterized in that** the drive system comprises a control unit (18) which is adapted to control the electric machine (9) with the help of the low voltage battery (21) at operation occasions when gears are shifted in the vehicle (1).

7. Drive system according to any of the preceding claims, **characterized in that** the drive system comprises a control unit (18) which is adapted to receive information concerning a parameter in order to estimate if the hybrid energy storage (20) has an undesired function.

8. Drive system according to any of the preceding claims, **characterized in that** the drive system comprises an indication member (25) which indicates when the hybrid energy storage (20) is estimated to be out of operation.

9. Drive system according to any of the preceding claims, **characterized in that** the output shaft (2a) of the combustion engine is connected to the sun wheel (10) of the planetary gear, that the input shaft (3a) of the gear box is connected to the planet wheel holder (12) of the planetary gear and that the rotor (9b) of the electric machine is connected to the ring wheel (11) of the planetary gear.

10. Method of driving a vehicle (1), wherein the vehicle (1) comprises a combustion engine (2) with an output shaft (2a), a gear box (3) with an input shaft (3a), an electric machine (9) which comprises a stator (9a) and a rotor (9b), and a planetary gear which comprises a sun wheel (10), a ring wheel (11) and a planet wheel holder (12), wherein the output shaft (2a) of the combustion engine is connected to a first of said components of the planetary gear such that a rotation of this shaft (2a) leads to a rotation of this component, wherein the input shaft (3a) of the gear box is connected to a second of said components of the planetary gear such that a rotation of this shaft leads to a rotation of this component and the rotor (9b) of the electric machine is connected to a third of said components of the planetary gear such that a rotation of the rotor leads to a rotation of this component, **characterized by** the steps to connect the electric machine (9) to a low voltage battery (21) which has a rated voltage of at most 60 volt during a starting process of the vehicle when a hybrid energy storage (20) in the vehicle is estimated to have an undesired function.

11. Method according to claim 10, **characterized by** the step to use a DC-DC transformer (22) for transforming electric energy which is led from the electric machine (9) to the low voltage battery (21).

12. Method according to claim 11, **characterized by** the step to use a DC-DC transformer (22) which is bidirectional such that it can also lead and transform electric energy which is led from the low voltage battery (21) to the electric machine (9).

13. Method according to claim 11 or 12, **characterized by** the step to use a low voltage battery in the form of an existing 24 volt battery (21) in the vehicle (1).

14. Method according to any of the preceding claims 10-13, **characterized by** the step to control the amount of electric energy which is led from the electric machine (9) to the low voltage battery (21) with the help of control equipment (19) such that the vehicle obtains a desired speed increase during the starting process.

15. Method according to any of the preceding claims 10-14, **characterized by** the step to control the electric machine (9) with the help of the low voltage battery (21) at operation occasions when gears are shifted in the vehicle (1).

16. Method according to any of the preceding claims 10-15, **characterized by** the steps to receive information concerning a parameter in order to determine if the hybrid energy storage (19) has an undesired function.

17. Method according to any of the preceding claims 10-16, **characterized by** the step to indicate to a driver of the vehicle when the hybrid energy storage (19) is estimated to be out of operation.

18. Method according to any of the preceding claims 10-17, **characterized by** the steps to connect the output shaft (2) of the combustion engine to the sun wheel (9) of the planetary gear, to connect the input shaft (3) of the gear box to the planet wheel holder (11) of the planetary gear and to connect the rotor (8) of the electric machine to the ring wheel (10) of the planetary gear.

19. Computer program comprising computer program code for making a computer implement a method according to any of the claims 10-18 when the computer program code is executed in the computer.

20. Computer program product comprising a data storage medium which is readable by a computer, wherein the computer program code of a computer program according to claim 19 is stored on the data storage medium.

21. Vehicle comprising a drive system according to any of the claims 1-9.

## Patentansprüche

1. Antriebssystem für ein Fahrzeug (1), wobei das Antriebssystem einen Verbrennungsmotor (2) mit einer Ausgangswelle (2a), ein Getriebe (3) mit einer Eingangswelle (3a), eine elektrische Maschine (9), die einen Stator (9a) und einen Rotor (9b) aufweist, und ein Planetengetriebe umfasst, das ein Sonnenrad (10), ein Hohlrad (11) und einen Planetenradträger (12) aufweist, wobei die Ausgangswelle (2a) des Verbrennungsmotors mit einer ersten der genannten Komponenten des Planetengetriebes verbunden ist, sodass eine Drehung dieser Welle (2a) zu einer Drehung dieser Komponente führt, wobei die Eingangswelle (3a) des Getriebes mit einer zweiten der genannten Komponenten des Planetengetriebes verbunden ist, sodass eine Drehung dieser Welle zu einer Drehung dieser Komponente führt, und der Rotor (9b) der elektrischen Maschine mit einer dritten der genannten Komponenten des Planetengetriebes verbunden ist, sodass eine Drehung des Rotors (9b) zu einer Drehung dieser Komponente führt, **dadurch gekennzeichnet, dass** das Antriebssystem eine Niedervoltbatterie (21) mit einer Nennspannung von höchstens 60 Volt und einen elektrischen Schalter (23) aufweist, mit dem die Niedervoltbatterie (21) mit der elektrischen Maschine (9) und einem Hybridenergiespeicher (20) verbindbar ist, und dass die Niedervoltbatterie (21) während eines Startvorgangs des Fahrzeugs mit der elektrischen Maschine (9) verbunden ist, wenn von dem Hybridenergiespeicher (20) angenommen wird, dass er eine unerwünschte Funktion hat.

2. Antriebssystem nach Anspruch 1, **dadurch gekennzeichnet, dass** das Antriebssystem einen Gleichspannungswandler (22) aufweist, der dazu eingerichtet ist, elektrische Energie zu wandeln, die von der elektrischen Maschine (9) zu der Niedervoltbatterie (21) geleitet wird.

3. Antriebssystem nach Anspruch 2, **dadurch gekennzeichnet, dass** der Gleichspannungswandler (22) bidirektional ist, sodass er auch elektrische Energie leiten und wandeln kann, die von der Niedervoltbatterie (21) zu der elektrischen Maschine (9) geleitet wird.

4. Antriebssystem nach Anspruch 2 oder 3, **dadurch gekennzeichnet, dass** die Niedervoltbatterie (21) eine in dem Fahrzeug (1) vorhandene 24-Volt Batterie ist, die unter anderem zum Starten des Verbrennungsmotors (1) verwendet wird.

5. Antriebssystem nach einem der vorhergehenden Ansprüche, **dadurch gekennzeichnet, dass** das Antriebssystem eine Steuereinheit (18) aufweist, die dazu eingerichtet ist, mit der Hilfe einer Steuerausrüstung (19) die Menge an elektrischer Energie zu steuern, die von der elektrischen Maschine (9) zu der Niedervoltbatterie (21) geleitet wird, sodass das Fahrzeug (1) während des Startvorgangs eine gewünschte Geschwindigkeitszunahme erzielt.

6. Antriebssystem nach einem der vorhergehenden Ansprüche, **dadurch gekennzeichnet, dass** das Antriebssystem eine Steuereinheit (18) aufweist, die dazu eingerichtet ist, mit der Hilfe der Niedervoltbatterie (21) die elektrische Maschine (9) in Betriebszuständen zu steuern, in denen Gänge in dem Fahrzeug (1) gewechselt werden.

7. Antriebssystem nach einem der vorhergehenden Ansprüche, **dadurch gekennzeichnet, dass** das Antriebssystem eine Steuereinheit (18) aufweist, die dazu eingerichtet ist, Information über einen Parameter zu erhalten, um abzuschätzen, ob der Hybridenergiespeicher (20) eine unerwünschte Funktion hat.

8. Antriebssystem nach einem der vorhergehenden Ansprüche, **dadurch gekennzeichnet, dass** das Antriebssystem ein Anzeigebauteil (25) aufweist, welches anzeigt, wenn vom Hybridenergiespeicher (20) angenommen wird, dass er sich außer Betrieb befindet.

9. Antriebssystem nach einem der vorhergehenden Ansprüche, **dadurch gekennzeichnet, dass** die Ausgangswelle (2a) des Verbrennungsmotors mit dem Sonnenrad (10) des Planetengetriebes verbunden ist, dass die Eingangswelle (3a) des Getriebes mit dem Planetenradträger (12) des Planetengetriebes verbunden ist, und dass der Rotor (9b) der elektrischen Maschine mit dem Hohlrad (11) des Planetengetriebes verbunden ist.

10. Verfahren zum Antreiben eines Fahrzeugs (1), wobei das Fahrzeug (1) einen Verbrennungsmotor (2) mit einer Ausgangswelle (2a), ein Getriebe (3) mit einer Eingangswelle (3a), eine elektrische Maschine (9), die einen Stator (9a) und einen Rotor (9b) aufweist, und ein Planetengetriebe umfasst, das ein Sonnenrad (10), ein Hohlrad (11) und einen Planetenradträger (12) aufweist, wobei die Ausgangswelle (2a) des Verbrennungsmotors mit einer ersten der genannten Komponenten des Planetengetriebes verbunden ist, sodass eine Drehung dieser Welle (2a) zu einer Drehung dieser Komponente führt, wobei die Eingangswelle (3a) des Getriebes mit einer zweiten der genannten Komponenten des Planetengetriebes verbunden ist, sodass eine Drehung dieser Welle zu einer Drehung dieser Komponente führt, und der Rotor (9b) der elektrischen Maschine mit einer dritten der genannten Komponenten des Planetengetriebes verbunden ist, sodass eine Drehung des Rotors zu einer Drehung dieser Komponente führt, **gekennzeichnet durch** den Schritt des Verbindens der elektrischen Maschine (9) mit einer Niedervoltbatterie (21), die eine Nennspannung von höchstens 60 Volt hat, während eines Startvorgangs des Fahrzeugs, wenn von einem Hybridenergiespeicher (20) in dem Fahrzeug angenommen wird, dass er eine unerwünschte Funktion hat.

11. Verfahren nach Anspruch 10, **gekennzeichnet durch** den Schritt des Verwendens eines Gleichspannungswandlers (22) zum Wandeln elektrischer Energie, die von der elektrischen Maschine (9) zu der Niedervoltbatterie (21) geleitet wird.

12. Verfahren nach Anspruch 11, **gekennzeichnet durch** den Schritt des Verwendens eines Gleichspannungswandlers (22), der bidirektional ist, sodass er auch elektrische Energie leiten und wandeln kann, die von der Niedervoltbatterie (21) zu der elektrischen Maschine (9) geleitet wird.

13. Verfahren nach Anspruch 11 oder 12, **gekennzeichnet durch** den Schritt des Verwendens einer Niedervoltbatterie in Gestalt einer in dem Fahrzeug (1) existierenden 24-Volt Batterie (21).

14. Verfahren nach einem der vorhergehenden Ansprüche 10 bis 13, **gekennzeichnet durch** den Schritt des Steuerns der Menge an elektrischer Energie, die von der elektrischen Maschine (9) zu der Niedervoltbatterie (21) geleitet wird, mit der Hilfe einer Steuerausrüstung (19), sodass das Fahrzeug während des Startvorgangs eine gewünschte Geschwindigkeitszunahme erzielt.

15. Verfahren nach einem der vorhergehenden Ansprüche 10 bis 14, **gekennzeichnet durch** den Schritt des Steuerns der elektrischen Maschine (9) mit der Hilfe der Niedervoltbatterie (21) in Betriebszuständen, in denen Gänge in dem Fahrzeug (1) gewechselt werden.

16. Verfahren nach einem der vorhergehenden Ansprüche 10 bis 15, **gekennzeichnet durch** den Schritt des Empfangens von Information über einen Parameter, um festzustellen, ob der Hybridenergiespeicher (20) eine unerwünschte Funktion hat.

17. Verfahren nach einem der vorhergehenden Ansprüche 10 bis 16, **gekennzeichnet durch** den Schritt des Anzeigens einem Fahrer des Fahrzeugs, wenn von dem Hybridenergiespeicher (20) angenommen wird, dass er außer Betrieb ist.

18. Verfahren nach einem der vorhergehenden Ansprüche 10 bis 17, **gekennzeichnet durch** die Schritte des Verbindens der Ausgangswelle (2) des Verbrennungsmotors mit dem Sonnenrad (10) des Planetengetriebes, des Verbindens der Eingangswelle (3) des Getriebes mit dem Planetenradträger (12) des Planetengetriebes, und des Verbindens des Rotors (8) der elektrischen Maschine mit dem Hohlrad (11) des Planetengetriebes.

19. Computerprogramm umfassend einen Computerprogrammcode zum Veranlassen eines Computers, ein Verfahren nach einem der Ansprüche 10 bis 18 zu implementieren, wenn der Computerprogrammcode in dem Computer ausgeführt wird.

20. Computerprogrammprodukt mit einem Datenspeichermedium, das von einem Computer lesbar ist, wobei der Computerprogrammcode eines Computerprogramms nach Anspruch 19 auf dem Datenspeichermedium gespeichert ist.

21. Fahrzeug mit einem Antriebssystem nach einem der Ansprüche 1 bis 9.

## Revendications

1. Système d'entraînement pour un véhicule (1), dans lequel le système d'entraînement comprend un moteur à combustion (2) avec un arbre de sortie (2a), une boîte de vitesses (3) avec un arbre d'entrée (3a), une machine électrique (9) qui comprend un stator (9a) et un rotor (9b), et un engrenage planétaire qui comprend une roue solaire (10), une roue annulaire (11) et un support de roue planétaire (12), dans lequel l'arbre de sortie (2a) du moteur à combustion est connecté à un premier desdits composants de l'engrenage planétaire de sorte qu'une rotation de cet arbre (2a) entraîne une rotation de ce composant, dans lequel l'arbre d'entrée (3a) de la boîte de vitesses est connecté à un deuxième desdits composants de l'engrenage planétaire de sorte qu'une rotation de cet arbre entraîne une rotation de ce composant et le rotor (9b) de la machine électrique est connecté à un troisième desdits composants de l'engrenage planétaire de sorte qu'une rotation du rotor (9b) entraîne une rotation de ce composant, **caractérisé en ce que** le système d'entraînement comprend une batterie basse tension (21) avec une tension nominale d'au plus 60 volts et un interrupteur électrique (23) avec lequel la batterie basse tension (21) peut être connectée à la machine électrique (9) et à un stockage d'énergie hybride (20), et que la batterie basse tension (21) est connectée à la machine électrique (9) durant un processus de démarrage du véhicule lorsque le stockage d'énergie hybride (20) est estimé avoir une fonction non souhaitée.

2. Système d'entraînement selon la revendication 1, **caractérisé en ce que** le système d'entraînement comprend un transformateur CC-CC (22) qui est adapté pour transformer l'énergie électrique qui est dirigée depuis la machine électrique (9) vers la batterie basse tension (21).

3. Système d'entraînement selon la revendication 2, **caractérisé en ce que** le transformateur CC-CC (21) est bidirectionnel de sorte qu'il puisse également diriger et transformer l'énergie électrique qui est dirigée depuis la batterie basse tension (21) vers la machine électrique (9).

4. Système d'entraînement selon la revendication 2 ou 3, **caractérisé en ce que** la batterie basse tension (21) est une batterie 24 volts existante dans le véhicule (1) qui, entre autres, est utilisée pour le démarrage du moteur à combustion (1).

5. Système d'entraînement selon l'une quelconque des revendications précédentes, **caractérisé en ce que** le système d'entraînement comprend une unité de commande (18) qui est adaptée pour contrôler la quantité d'énergie électrique qui est dirigée depuis la machine électrique (9) vers la batterie basse tension (21) avec l'aide d'un équipement de commande (19) de sorte que le véhicule (1) obtienne une augmentation de vitesse souhaitée durant le processus de démarrage.

6. Système d'entraînement selon l'une quelconque des revendications précédentes, **caractérisé en ce que** le système d'entraînement comprend une unité de commande (18) qui est adaptée pour contrôler la machine électrique (9) avec l'aide de la batterie basse tension (21) à l'occasion d'un fonctionnement lorsque les vitesses sont changées dans le véhicule (1).

7. Système d'entraînement selon l'une quelconque des revendications précédentes, **caractérisé en ce que** le système d'entraînement comprend une unité de commande (18) qui est adaptée pour recevoir des informations concernant un paramètre afin d'estimer si le stockage d'énergie hybride (20) a une fonction non souhaitée.

8. Système d'entraînement selon l'une quelconque des revendications précédentes, **caractérisé en ce que** le système d'entraînement comprend un élément d'indication (25) qui indique quand le stockage d'énergie hybride (20) est estimé hors service.

9. Système d'entraînement selon l'une quelconque des revendications précédentes, **caractérisé en ce que** l'arbre de sortie (2a) du moteur à combustion est connecté à la roue solaire (10) de l'engrenage planétaire, que l'arbre d'entrée (3a) de la boîte de vitesses est connecté au support de roue planétaire (12) de l'engrenage planétaire et que le rotor (9b) de la machine électrique est connecté à l'engrenage annulaire (11) de l'engrenage planétaire.

10. Procédé de conduite d'un véhicule (1), dans lequel le véhicule (1) comprend un moteur à combustion (2) avec un arbre de sortie (2a), une boîte de vitesses (3) avec un arbre d'entrée (3a), une machine électrique (9) qui comprend un stator (9a) et un rotor (9b), et un engrenage planétaire qui comprend une roue solaire (10), une roue annulaire (11) et un support de roue planétaire (12), dans lequel l'arbre de sortie (2a) du moteur à combustion est connecté à un premier desdits composants de l'engrenage planétaire de sorte qu'une rotation de cet arbre (2a) entraîne une rotation de ce composant, dans lequel l'arbre d'entrée (3a) de la boîte de vitesses est connecté à un deuxième desdits composants de l'engrenage planétaire de sorte qu'une rotation de cet arbre entraîne une rotation de ce composant et le rotor (9b) de la machine électrique est connecté à un troisième desdits composants de l'engrenage planétaire de sorte qu'une rotation du rotor entraîne une rotation de ce composant, **caractérisé par** l'étape pour connecter la machine électrique (9) à une batterie basse tension (21) qui a une tension nominale d'au plus 60 volts durant un processus de démarrage du véhicule lorsqu'un stockage d'énergie hybride (20) dans le véhicule est estimé avoir une fonction non souhaitée.

11. Procédé selon la revendication 10, **caractérisé par** l'étape d'utilisation d'un transformateur CC-CC (22) pour la transformation de l'énergie électrique qui est dirigée depuis la machine électrique (9) vers la batterie basse tension (21).

12. Procédé selon la revendication 11, **caractérisé par** l'étape d'utilisation d'un transformateur CC-CC (22) qui est bidirectionnel de sorte qu'il puisse également diriger et transformer l'énergie électrique qui est dirigée depuis la batterie basse tension (21) vers la machine électrique (9).

13. Procédé selon la revendication 11 ou 12, **caractérisé par** l'étape d'utilisation d'une batterie basse tension sous la forme d'une batterie 24 volts existante (21) dans le véhicule (1).

14. Procédé selon l'une quelconque des revendications précédentes 10-13, **caractérisé par** l'étape de contrôle de la quantité d'énergie électrique qui est dirigée depuis la machine électrique (9) vers la batterie basse tension (21) avec l'aide d'un équipement de contrôle (19) de sorte que le véhicule obtienne une augmentation de vitesse souhaitée durant le processus de démarrage.

15. Procédé selon l'une quelconque des revendications précédentes 10-14, **caractérisé par** l'étape de contrôle de la machine électrique (9) avec l'aide de la batterie basse tension (21) à l'occasion d'un fonctionnement lorsque les vitesses sont changées dans le véhicule (1).

16. Procédé selon l'une quelconque des revendications précédentes 10-15, **caractérisé par** le'étape pour la réception d'informations concernant un paramètre afin de déterminer si le stockage d'énergie hybride (20) a une fonction non souhaitée.

17. Procédé selon l'une quelconque des revendications précédentes 10-16, **caractérisé par** l'étape d'indication à un conducteur du véhicule lorsque le stockage d'énergie hybride (20) est estimé hors service.

18. Procédé selon l'une quelconque des revendications précédentes 10-17, **caractérisé par** les étapes de connexion de l'arbre de sortie (2) du moteur à combustion à la roue solaire (10) de l'engrenage planétaire, pour connecter l'arbre d'entrée (3) de la boîte de vitesses au support de roue planétaire (12) de l'engrenage planétaire et pour connecter le rotor (8) de la machine électrique à la roue annulaire (11) de l'engrenage planétaire.

19. Programme informatique comprenant un code de programme informatique pour amener un ordinateur à mettre en œuvre un procédé selon l'une quelconque des revendications 10-18 lorsque le code de programme informatique est exécuté sur l'ordinateur.

20. Produit de programme informatique comprenant un support de stockage de données qui est lisible par un ordinateur, dans lequel le code de programme informatique d'un programme informatique selon la revendication 19 est stocké sur le support de stockage de données.

21. Véhicule comprenant un système d'entraînement selon l'une quelconque des revendications 1-9.
